# EUROPÄISCHE PATENTANMELDUNG

(11) **EP 0 809 312 A1**
(43) Veröffentlichungstag der Anmeldung: **26.11.1997**
(21) Anmeldenummer: 97102062.3
(22) Anmeldetag: 10.02.1997
(51) Int. Cl.: H01M 6/06, H01M 4/06

(54) **Verfahren zur Herstellung einer galvanischen Zelle**

(30) Priorität: 23.05.1996 DE 19620735
(71) Anmelder: VARTA Batterie Aktiengesellschaft, 30419 Hannover (DE)
(72) Erfinder: Spahrbier, Dieter, Dr., 65779 Kelkheim (DE)
(74) Vertreter: Kaiser, Dieter Ralf, Dipl.-Ing.

(57) **Zusammenfassung**

Die Erfindung betrifft ein Verfahren zur Herstellung einer galvanischen Zelle mit einem Zinkpulver enthaltenden Anodengel, einem alkalischen Elektrolyten und einer durch einen Separator davon getrennten, Mangandioxid enthaltenden Kathodenmasse, welches dadurch gekennzeichnet ist, daß der Kathodenmasse alkalischer Elektrolyt in fester Form zugesetzt wird.

## Beschreibung

Die Erfindung betrifft ein Verfahren zur Herstellung einer galvanischen Zelle mit einem Zinkpulver enthaltenden Anodengel, einem alkalischen Elektrolyten und einer durch einen Separator davon getrennten, Mangandioxid enthaltenden Kathodenmasse.

Teilchenförmiges Mangandioxid wird im Gemisch mit gepulverter Kohle und/oder Graphit sowie mit einem polymeren Bindemittel wie Polyethylenpulver als kathodisches Material in handelsüblichen Alkali-Manganzellen verwendet. Dabei wird aus der Kathodenmasse ein ring- oder rohrförmiger Formkörper gepreßt, dieser in einen gleichzeitig als Ableiter dienenden Elektrodenbecher eingesetzt und unter Zwischenlage eines Separators mit einer wäßrigen alkalischen Lösung als Elektrolyt sowie einem im wesentlichen Zinkpulver, Elektrolyt und ein Verdickungsmittel enthaltendes Anodengel befüllt. Zellen der vorgeschriebenen Art haben den Nachteil, daß ihre elektrische Belastbarkeit stark vom Diaphragmenwiderstand der Kathode abhängt. Es hat nicht an Versuchen gefehlt, den Diaphragmenwiderstand der Kathode dadurch abzusetzen, daß man der Kathodenmasse 7-10 Gew.% Elektrolytlösung in Form von 35-52% wäßriger KOH zugesetzt hat (s. David Linden, Handbook of batteries and fuel cells, 2nd ed., McGraw-Hill 1995, Chapter 10.3). Nachteilig bei dieser Verfahrensweise wirkt sich allerdings aus, daß die Standzeit der Preßwerkzeuge sinkt.

Die Erfindung hat sich die Aufgabe gestellt, ein Verfahren anzugeben, das die Nachteile der bekannten Herstellungsverfahren vermeidet.

Erfindungsgemäß wird die Aufgabe dadurch gelöst, daß der Kathodenmasse von galvanischen Zellen der vorgenannten Art alkalischer Elektrolyt in fester Form zugesetzt wird.

Die Herstellung erfolgt dabei in der Weise, daß
a) teilchenförmiges MnO₂ mit einem hochdispersen, kohlenstoffhaltigen Material, einem polymeren Bindemittel gemischt, komßaktiert und granuliert,
b) diese Masse mit alkalischen Elektrolyt in fester Form gemischt und ringförmige Elektroden gepreßt werden, in die
c) getrennt durch einen Separator das Anodengel eingefüllt,
d) wäßriger alkalischer Elektrolyt zugegeben und
e) die Zelle durch einen als Elektrodenpol dienenden, einen Stromableiter besitzenden Deckel verschlossen
wird, wobei der alkalische Elektrolyt in fester Form in der Verfahrensstufe a) und/oder b) zugesetzt wird.

Unter hochdispersen, kohlenstoffhaltigem Material wird ein Kohlenstoffpulver mit einer Teilchengröße im Bereich von 0,10 µm bis 10 µm verstanden.

In weiterer Ausgestaltung der Erfindung werden 5 - 10 Gew.% alkalischer Elektrolyt in fester Form zugesetzt.

Vorzugsweise werden 7 - 9 Gew.% KOH in fester Form zugesetzt, wobei es sich um handelsübliche feste KOH mit einem H₂O-Gehalt von etwa 15 Gew.% handelt.

Die handelsübliche feste KOH wird vor ihrem Zusatz zur Kathodenmasse vorzugsweise in einem mit CO₂-freier Trockenluft beaufschlagten Mahlwerk zu einer Korngröße von 50 - 200µm aufgemahlen. Der Feinanteil wird vorzugsweise im Verfahrensschritt a) und der Korngrößenbereich von 50 - 200µm vorzugsweise im Verfahrensschritt b) zugesetzt, wobei vorzugsweise gekapselte und mit Absaugvorrichtung versehene Apparaturen eingesetzt werden.

Vorteilhafterweise wird die Konzentration des Elektrolyten in der gebrauchsfertigen Zelle dadurch eingestellt, daß der Separator mit Wasser oder einer wäßrigen KOH-Lösung getränkt wird. Die Konzentration der wäßrigen KOH-Lösung liegt dabei vorzugsweise im Bereich einer 0,5 bis 1 molaren Lösung.

Alternativ zu der vorstehenden Vorgehensweise wird eine Tränkstation für die gepreßten Kathodenringe vorgesehen. Die wäßrige KOH-Lösung wird dabei umgepumpt, der pH-Wert der Lösung kontrolliert und gegebenenfalls korrigiert. Zur Verbesserung der Elektrolytaufnahme kann zusätzlich eine Temperiereinrichtung vorgesehen werden, die die Temperierung des Tränkelektrolyten im Bereich von 20 °C bis 70 °C gestattet.

Die erfindungsgemäß hergestellten Zellen sind für Anwendungen mit intermitterender Belastung insbesondere in Blitzlichtgeräten geeignet. Darüber hinaus wird die allgemeine Hochstrombelastbarkeit bei kontinuierlichen Betrieb verbessert. Neben der Erhöhung der Kapazität der erfindungsgemäß hergestellten Zellen und der Verbesserung ihrer Hochstrombelastbarkeit wird gegenüber dem Verfahren, welches elektrolythaltige Kathodenmasse verwendet, die Standzeit der Preßwerkzeuge deutlich erhöht.

Die Erfindung wird anhand der nachfolgenden Beispiele ausführlich erläutert.

### Vergleichsbeispiel 1

In Zellen der Baugröße LR6 (Mignon - AA) wird eine Kathodenmasse eingesetzt, die je 1000g
- 861g: MnO₂,
- 89g: Graphit,
- 5g: Polyether und
- 45g: 50 Gew.%iger KOH enthält.

### Beispiel 1

Analog Vergleichsbeispiel 1 wurden Zellen hergestellt, die an Stelle von 6 Gew.% einer 38%igen wäßrigen KOH-Lösung, 3 Gew.% KOH in fester Form enthielten.

Die Versuchsergebnisse unter den angegebenen Entladebedingungen sind in Tabelle 1 aufgeführt.

Dabei bedeutet N0 die Verwendung von ungelagerten, frisch hergestellten Zellen, 7MT den Einsatz von Versuchszellen, die 7 Tage bei 70°C gelagert wurden und 28MT die Verwendung von Versuchszellen, die einer Lagerung über 28 Tage bei 70°C unterzogen wurden.

Die erfindunggemäßen Zellen weisen einen geringeren inneren Widerstand, eine höhere Spannungslage sowie ein verbessertes Lagerverhalten auf.

### Vergleichsbeispiel 2

In Zellen der Baugröße LR03 (Mikro - AAA) wird eine Kathodenmasse eingesetzt, die je 1000g
- 858g: MnO₂,
- 89g: Graphit,
- 8g: eines Gemisches aus Polyether und carboxylierter Zellulose sowie
- 45g: 38 Gew.% KOH-Lösung enthält.

### Beispiel 2

Analog Vergleichsbeispiel 2 wurden Zellen hergestellt, die anstelle von 6 Gew.% einer wäßrigen 38%igen KOH-Lösung, 3 Gew.% KOH in fester Form enthielten.

Die Versuchsergebnisse, die unter den angegebenen Entladebedingungen erhalten wurden, sind in Tabelle 2 aufgeführt.
Die erfindungsgemäßen Zellen besitzen gegenüber den Vergleichszellen einen geringeren inneren Widerstand, eine höhere Spannungslage und eine höhere Entladekapazität bei intermittierender Entladung. Weiterhin weisen die erfindungsgemäßen Zellen auch eine geringere Gasungsrate und damit eine geringere Selbstentladungsrate auf.

### Vergleichsbeispiel 3

Analog Vergleichsbeispiel 2 wurden Zellen hergestellt, die anstelle von 6 Gew.% einer 38 Gew.-%igen KOH-Lösung nur 4,5 Gew. % der vorgenannten KOH-Lösung enthielten.

### Beispiel 3

Die erfindungsgemäßen Zellen wurden analog dem Vergleichsbeispiel 3 hergestellt, enthielten jedoch anstelle des Anteils an KOH-Lösung in der Kathodenmasse 3 Gew. % fester KOH.

Tabelle 3 enthält einen Vergleich der erfindungsgemäßen Zellen mit den Vergleichszellen unter den angegebenen Entladebedingungen.

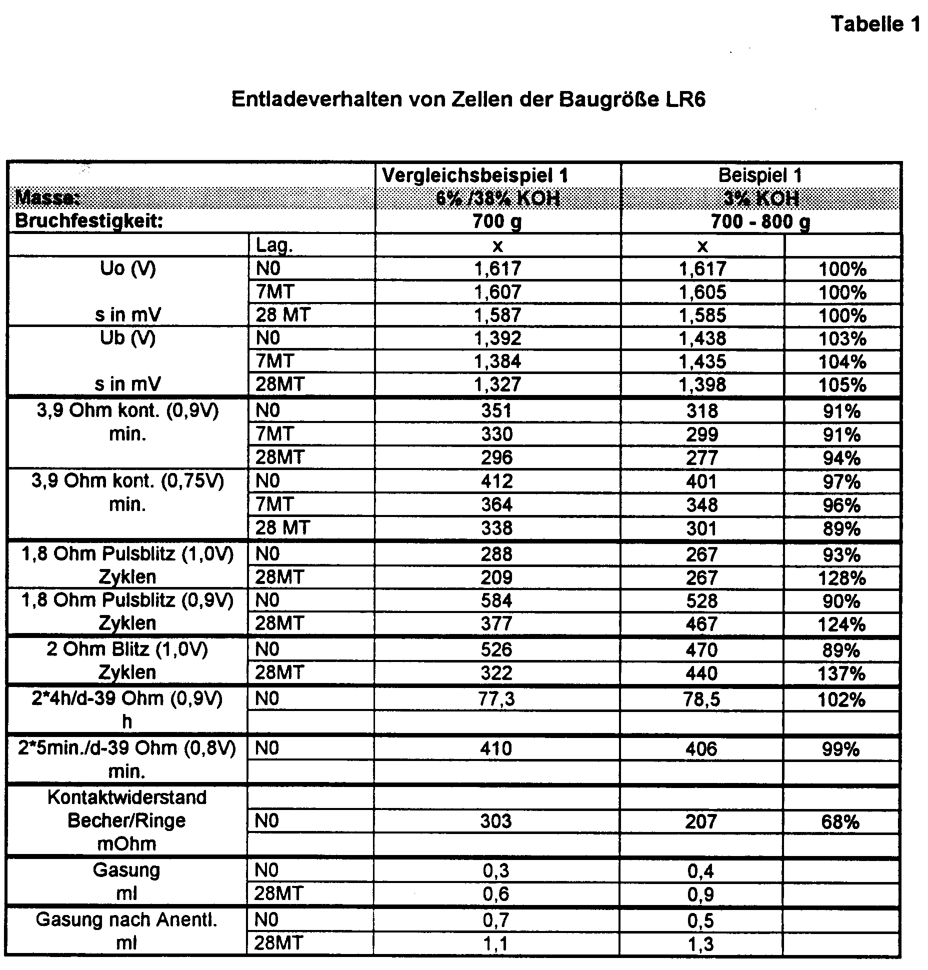

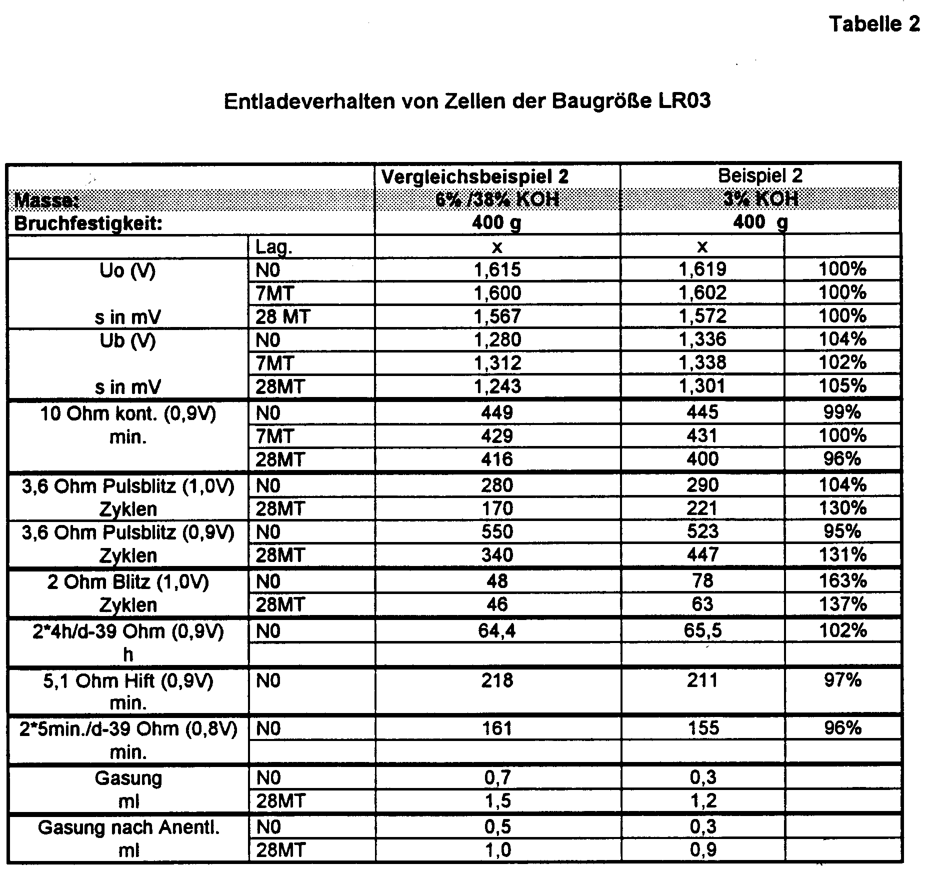

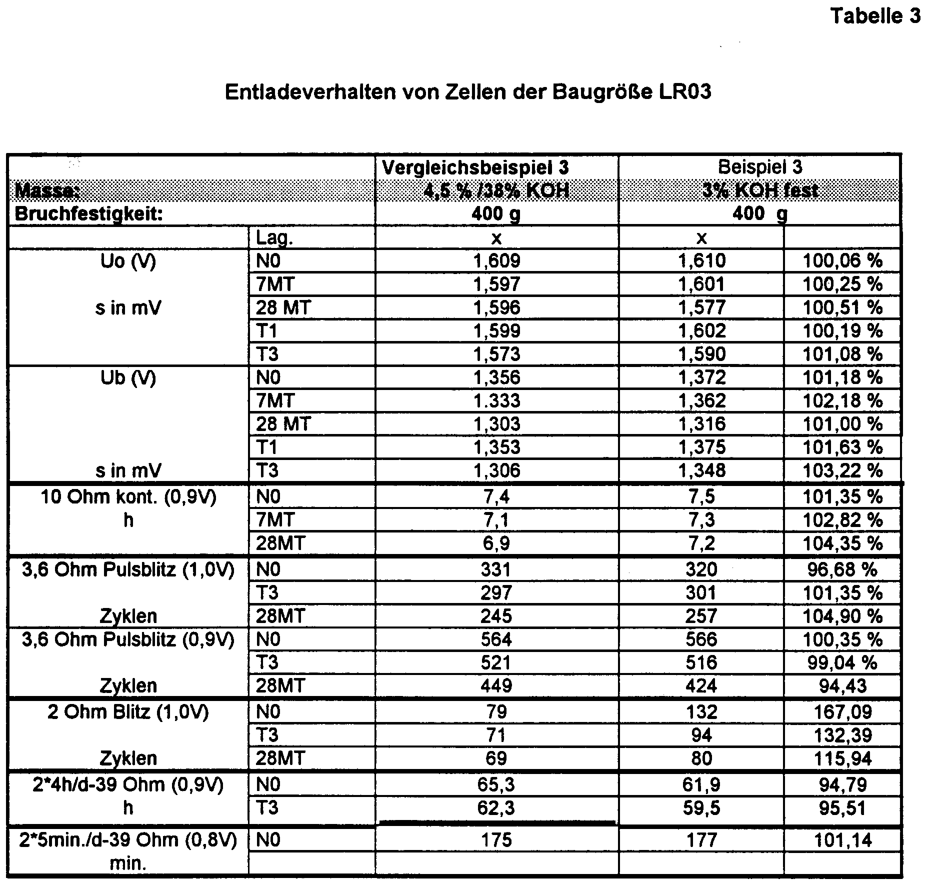

## Patentansprüche

1. Verfahren zur Herstellung einer galvanischen Zelle mit einem Zinkpulver enthaltenden Anodengel, einem alkalischen Elektrolyten und einer durch einen Separator davon getrennten, Mangandioxid enthaltenden Kathodenmasse, dadurch gekennzeichnet, daß der Kathodenmasse alkalischer Elektrolyt in fester Form zugesetzt wird.

2. Verfahren nach Anspruch 1, dadurch gekennzeichnet, daß
a) teilchenförmiges MnO₂ mit einem hochdispersen, kohlenstoffhaltigen Material, einem polymeren Bindemittel gemischt, kompaktiert und granuliert,
b) zu dieser Masse teilchenförmiger, fester alkalischer Elektrolyt zugesetzt und zu einer ringförmige Elektrode gepreßt, in die
c) getrennt durch einen Separator das Anodengel eingefüllt,
d) wäßriger Elektrolyt zugegeben und
e) die Zelle durch einen als Elektrodenpol dienenden, einen Stromableiter besitzenden Deckel verschlossen
wird, wobei der alkalische Elektrolyt in fester Form in der Verfahrensstufe a) und/oder b) zugesetzt wird.

3. Verfahren nach Anspruch 2, dadurch gekennzeichnet, daß 5 - 10 Gew.% alkalischer Elektrolyt in fester Form zugesetzt wird.

4. Verfahren nach Anspruch 3, dadurch gekennzeichnet, daß 7 - 9 Gew.% KOH in fester Form zugesetzt wird.

5. Verfahren nach einem der Ansprüche 3 oder 4, dadurch gekennzeichnet, daß der feste Elektrolyt in einer Korngröße von 50 - 200 µm zugesetzt wird.

6. Verfahren nach einem oder mehreren der Ansprüche 2 - 5, dadurch gekennzeichnet, daß der Separator mit Wasser oder einer wäßrigen KOH-Lösung getränkt wird.

7. Verfahren nach einem oder mehreren der Ansprüche 2 - 6, dadurch gekennzeichnet, daß die Kathodenringe vor dem Einsetzen in den Elektrodenbecher mit Wasser oder einer wäßrigen KOH-Lösung getränkt werden.

8. Verwendung einer galvanischen Zelle hergestellt nach einem oder mehreren der Ansprüche 1 - 7 für Anwendungen mit intermittierender Belastung der galvanischen Zelle insbesondere in Blitzlichtgeräten.
